Europäisches Patentamt

European Patent Office

Office européen des brevets

(11) Veröffentlichungsnummer: **0 329 643**

**A1**

(12) **EUROPÄISCHE PATENTANMELDUNG**

(21) Anmeldenummer: **89890039.4**

(51) Int. Cl.⁴: **B 01 D 53/34**

(22) Anmeldetag: **15.02.89**

(30) Priorität: **15.02.88 AT 347/88**

(43) Veröffentlichungstag der Anmeldung:
**23.08.89 Patentblatt 89/34**

(84) Benannte Vertragsstaaten:
**BE CH DE FR GR IT LI**

(71) Anmelder: **VOEST-ALPINE STAHL LINZ Gesellschaft m.b.H.**
**Turmstrasse 45**
**A-4020 Linz (AT)**

(72) Erfinder: **Klinar, Gottfried**
**Alpenstrasse 33**
**A-8700 Leoben (AT)**

**Zuder, Gerald, Dipl.-Ing.Dr.**
**Salzlände 13**
**A-8700 Leoben (AT)**

**Hanke, Reinhart, Dipl.-Ing.**
**Annaberggasse 2**
**A-8700 Leoben (AT)**

(74) Vertreter: **Kretschmer, Adolf, Dipl.-Ing. et al**
**Patentanwälte Dipl.Ing. A. Kretschmer Dr. Thomas M. Haffner Schottengasse 3a**
**A-1014 Wien (AT)**

(54) **Verfahren zum Desodorieren und Reinigen von Abluft und Abgasen.**

(57) Beim einem Verfahren zum Desodorieren und Reinigen von Abluft und Abgasen bei welchem die zu reinigenden Abgase durch ein Festbettfilter (2) geleitet werden, wird das Festbettfilter (2) mit Nutzpflanzen oder Zierpflanzen (1) bepflanzt und aus einem für Nutzpflanzen oder Zierpflanzen (1) geeigneten Substrat (3) wie z.B. Kompost ausgebildet. Die Abluft bzw. die Abgase werden in einem Wäscher (6) vorgereinigt und gemischt, die Temperatur und Feuchtigkeit der zu reinigenden Abluft bzw. Abgase mit dem Wäscher eingestellt und mit geregelter Temperatur und Feuchtigkeit durch das bepflanzte Festbettfilter (2) geleitet.

EP 0 329 643 A1

**Beschreibung**

## Verfahren zum Desodorieren und Reinigen von Abluft und Abgasen

Die Erfindung bezieht sich auf ein Verfahren zum Desodorieren und Reinigen von Abluft und Abgasen bei welchem die zu reinigenden Abgase durch ein Festbettfilter geleitet werden, wobei das Festbettfilter mit Nutzpflanzen oder Zierpflanzen bepflanzt wird und aus einem für Nutzpflanzen oder Zierpflanzen geeigneten Substrat wie z.B. Kompost ausgebildet wird.

Für die Reinigung von Abluft, insbesondere von Rotteabluft ist es bekannt, sogenannte Biofilter einzusetzen. Bekannte derartige Biofilter bestehen aus biologisch aktivem Material, wobei als Träger in aller Regel Kompost verwendet wird. Die in Kompost anwesende Biozönose ist in erster Linie in der Lage organische Substanzen, wie sie in Rotteabluft vorhanden sind, abzubauen und der Abbau derartiger organischer Substanzen führt in erster Linie zu einer Desodorierung und damit naturgemäß auch zu einer gewissen Reinigung. Schadstoffe werden bei derartigen bekannten Desodorierungsverfahren nicht in den Biofilter eingeleitet, da die Befürchtung besteht, daß derartige Schadstoffe die Tätigkeit der Mikroorganismen beeinträchtigt. Die bekannte Verwendung derartiger Biofilter beschränkt sich daher in erster Linie auf die Desodorierung und im Falle von zu desodorierenden Gasen wie Rotteabluft, treten nenneswerte Schadstoffkonzentrationen im Gasstrom nicht auf.

Neben der Verwendung von Kompostfiltern bzw. Biofiltern sind auch biologische Wäscher bekannt geworden, bei welchen im Kreislauf geführter mit Mikroorganismen besiedelter Belebtschlamm als Waschflüssigkeit verwendet wird. Auch mit derartigen biologisch aktiven Reinigungsmethoden gelingt in erster Linie eine Desodorierung, da es gelingt, organische Substanzen, welche eine Geruchsbelästigung darstellen können, zu entfernen.

Für die Beseitigung von Schadstoffen sind eine Reihe von Festbettfiltern bekannt geworden, welche Schadstoffe auf chemischen Wege binden, insbesondere für die Rauchgasentschwefelung sind derartige kalkhältige Adsorbermaterialien bereits vorgeschlagen worden.

Die Erfindung zielt nun darauf ab, ein Verfahren der eingangs genannten Art zu schaffen, mit welchem es möglich ist, ein Filter sowohl für die Desodorierung als auch für die Reinigung und Abtrennung von Schadstoffen einzusetzen, wobei das Filterbett gleichzeitig die Möglichkeit bieten soll, Schadstoffe in einer Weise zu beseitigen, welche keine zusätzlichen Verhaldungsprobleme mit sich bringen. Im besonderen zielt das erfindungsgemäße Verfahren darüber hinaus darauf ab, ein Kultivationsmedium zu schaffen, mit welchem ein rascheres Wachstum von Nutz- und Zierpflanzen ermöglicht wird. Zur Lösung dieser Aufgabe besteht das erfindungsgemäße Verfahren im wesentlichen darin, daß die Abluft bzw. die Abgase mit geregelter Temperatur und Feuchtigkeit durch das bepflanzte Festbettfilter geleitet werden, daß die Abluft bzw. Abgase, insbesondere Rauchgase in einem Wäscher vorgereinigt und gemischt werden, daß die Temperatur und Feuchtigkeit der zu reinigenden Abluft bzw. Abgase mit einem Wäscher eingestellt werden und daß die $CO_2$-Konzentration der durch das Festbettfilter geleiteten Gase auf unter 4 Vol.%, insbesondere 1 - 2 Vol.%, gegebenenfalls durch Zumischen von Frischluft zum Abgasstrom eingestellt wird. Dadurch, daß als Festbettfilter ein mit Nutzpflanzen oder Zierpflanzen bepflanztes Substrat, beispielsweise Kompost verwendet wird, wird eine von üblichen biologischen Filter abweichende Biozönose geschaffen, welche in der Lage ist auch Schadstoffe biologisch umzusetzen. Die Bepflanzung mit Nutzpflanzen oder Zierpflanzen ermöglicht zum einen die Ausnützung der Restwärme von Abgasen, wodurch bereits eine gewisse Beschleunigung des Wachstums von verschiedenen Nutz- oder Zierpflanzen erzielt werden kann. Darüber hinaus führt aber die Verwendung von Nutz- oder Zierpflanzen in einen derartigen Festbettfilter dazu, daß mikrobielle Symbionten der Pflanzenwurzel, insbesondere Bakterien und Mykorrhiza durch die Verfügbarkeit von leicht abbaubaren Kohlenstoffverbindungen und anderen Nährstoffen aus den Abgasen stimuliert werden, so daß eine zusätzliche Stimulation des Pflanzenwachstums erzielt wird. Die Wurzelsymbionten bzw. deren Stoffwechsel bilden einen der Hauptfaktoren der Pflanzenernährung, woraus sich die Stimulation des Pflanzenwachstums ergibt. Gleichzeitig erlauben derartige Wurzelsymbionten die Umsetzung von Schadstoffen, welche üblicherweise die Biozönose eines Biofilters beeinträchtigten könnten und ermöglichen so die biologische Verwertung von Schadstoffen in Form ihrer Abbauprodukte als natürliche von der Pflanze für das Wachstum benötigte Substanzen. Der Abbau von organischen Verbindungen wie Carbonsäuren, Alkoholen, Estern, Stickstoffverbindungen und Kohlenwasserstoffen, ist mit einer Reihe von bekannten Biofiltern prinzipiell möglich, die Umsetzung von Stickstoffverbindungen insbesondere Amoniak und die Umsetzung von klassischen Schadstoffen wie Schwefel und Halogeniden durch Einbinden in den Aufbau bzw. Wachstumsprozeß der Pflanze ermöglicht jedoch eine weit höhere Reinigungsleistung gegenüber konventionellen Biofiltern. Gleichzeitig erlaubt die Bepflanzung mit Nutzpflanzen oder Zierpflanzen eine bessere Kontrolle des Wasserhaushaltes des Filterbettes und dadurch eine gleichbleibende Adsorption von in den Gasen enthaltenen Schadstoffen. Während adsorbierte organische Substanzen als Nährsubstrat für die Bakterien wirken und zu Biomasse, $CO_2$, Wasser und eventuell auch Stickstoff abgebaut bzw. umgeformt werden, können insbesondere Schwefelverbindungen bei der Eiweißsynthese in Pflanzen eingebaut werden und andere Schadstoffe zumindest in eine Form umgesetzt werden, welche wiederum als Nährstoffe oder notwendige Spurenelemente das Pflanzenwachstum stimulieren.

Im Rahmen des erfindungsgemäßen Verfahrens hat es sich gezeigt, daß die Zumischung von Rauchgasen im Gegensatz zu den Erwartungen keineswegs dazu führt, daß die Aktivität der Biozönose herabgesetzt wird. Da Nutzpflanzen in der Lage sind $CO_2$ umzusetzen, kann in vorteilhafter Weise die $CO_2$-Konzentration der durch das Festbettfilter geleiteten Gase auf unter 4 Vol.%, insbesondere 1 - 2 Vol.%, gegebenenfalls durch Zumischen von Frischluft zum Abgasstrom eingestellt werden, wodurch die biologische Leistung des Blattgrüns derartiger Nutz- oder Zierpflanzen gleichfalls voll ausgenützt werden kann.

Die Verwendung von Abgasen, insbesondere von Rauchgasen, wie dies einer bevorzugten Ausbildung der Erfindung entspricht, ermöglicht darüber hinaus in einfacher Weise die gewünschte Temperatur im Filterbett einzuhalten. Es ist daher besonders vorteilhaft die Abluft und Abgase, insbesondere Rauchgase in einem Wäscher vorzureinigen und die Temperatur und Feuchtigkeit der zu reinigenden Abluft bzw. Abgase mit dem Wäscher einzustellen, wodurch in einfacher Weise die Zumischung und Kühlung von Rauchgasen mit der Maßgabe erfolgen kann, daß die Betriebstemperatur des Filterbettes unter 40°C, vorzugsweise zwischen 25 - 35°C gehalten wird. Die Verwendung eines Wäschers dient hiebei der weitgehenden Vorreinigung der Rauchgase und ermöglicht gleichzeitig die relative Feuchtigkeit der durch das Festbettfilter zu leitenden Gase exakt einzustellen. Aus derartigen Wäschern wird üblicherweise ein mit Wasserdampf gesättigter Gasstrom abgezogen und die Sättigungsbedingungen können relativ exakt eingehalten werden. Eine unerwünschte Nebelbildung und damit ein unerwünschter erhöhter Wasseranfall unterbleibt auf diese Weise und es kann die Durchlässigkeit des Filterbettes exakter aufrechterhalten werden.

Um eine Überfrachtung des Filterbettes zu vermeiden, hat es sich als vorteilhaft herausgestellt das Verfahren so durchzuführen, daß die Flächenbelastung des Filters auf weniger als 50 m³/m²h, vorzugsweise auf 20 - 30 m³/m²h, eingestellt wird.

Mit den oben genannten Maßnahmen wird den Mikroorganismen im Filtermaterial die erforderliche Menge an Nährstoffen zur Verfügung gestellt und es können Filtertemperaturen eingestellt werden, die dem Temperaturoptimum der für den Abbau der jeweils zu entfernenden Schadstoffe in Frage kommenden Arten von Mikroorganismen bzw. mikrobiellen Biozönosen näher kommen, als dies bei konventionellen biologischen Filtern möglich war. Gleichzeitig wird eine ausreichende Feuchtigkeit des Filtermaterials bzw. eine ausreichende Wasserversorgung für den Betrieb leistungsfähiger mikrobieller Populationen aufrechterhalten und über die Nutz- oder Zierpflanzen eine mehr oder minder selbsttätige Regulierung des Feuchtigkeitsgehaltes erzielt. Den Abgasen ist immer ein mehr oder minder großer Anteil Abluft, beispielsweise Rotteabluft, zuzusetzen, wodurch zum einen eine entsprechende Menge an leicht abbaubaren organischen Substanzen für das Wachstum der Biozönose zur Verfügung gestellt wird und zum anderen auch eine entsprechende Sauerstoffversorgung für die Mikroorganismen sichergestellt werden kann. Erforderlichenfalls kann Frischluft zur Aufrechterhaltung einer ausreichenden Sauerstoffversorgung für die Mikroorganismen zugesetzt werden, wobei mit einer derartigen Frischluftzufuhr wiederum durch entsprechende Einstellung des Mischungsverhältnisses zu den Verbrennungsabgasen oder Rauchgasen, welche einer Reinigung unterworfen werden sollen, der gewünschte $CO_2$-Gehalt eingestellt werden kann.

Mit einer derartigen Kombination von Rotteabluft und Verbrennungsabgasen und gegebenenfalls Frischluft, wird die Möglichkeit geschaffen das Filterbett mit Substanzen zu beaufschlagen, welche bei konventionellen Biofiltern obligatorisch wären und es wird neben dem Abbau von organischen Verbindungen, wie Carbonsäuren, Alkoholen, Estern, Stickstoffverbindungen oder Kohlenwasserstoffen, wie sie für die Desodorierung erforderlich ist, auch ein Abbau der Stickstoffverbindungen, insbesondere Ammoniak unter gleichzeitiger vermehrter Bildung von Huminsäuren erreicht. Gerade diese vermehrte Bildung von Huminsäuren führt in der Folge zu einem höherwertigen verbleibenden Substrat, welches nach Ernten bzw. Versetzen der Pflanzen als hochwertiges Nutzsubstrat verbleibt. Die ständige Regeneration der Sorptionskapazität durch den kontinuierlichen mikrobiellen Abbau der adsorbierten Schadstoffe führt darüber hinaus bei gleichzeitiger Bepflanzung mit Nutz- oder Zierpflanzen dazu, daß höhere Standzeiten des Filtermaterials erzielt werden.

Wie bereits erwähnt, ist die Stimulation des Pflanzenwachstums nicht ausschließlich auf die relativ hohen Filtertemperaturen zurückzuführen. Als besonders geeignet für die Bepflanzung des Substrates haben sich alle Sorten von Glashauspflanzen, insbesondere Nachtschattengewächse und Monatserdbeeren aber auch Melanzane, Paprika, Kürbisse und Gurken, bewährt. Im Rahmen der Zierpflanzen sind Knöterichgewächse besonders bevorzugt, da auch diese Gewächse über eine besonders günstige Biozönose in Form von Wurzelsymbionten verfügen. Bei Monatserdbeeren wurde beobachtet, daß an Stelle der normalen Zeit von wenigstens einem Jahr bis zur Ernte, die erste Ernte dreieinhalb Monate nach der Keimung erzielt werden kann. Bei Bepflanzung des Substrates mit Schwarzpappeln konnte nach einem Zeitraum von sechs Monaten ein Stammdurchmesser von 2 cm und eine Höhe von 2 m erzielt werden, wodurch gleichfalls die deutlich höheren Wachstumsleistungen dokumentiert wurden. Auch Feigenbäume eignen sich hervorragend zur Bepflanzung derartiger Substrate.

Fast alle Schadstoffe die gasförmig toxisch wären, können im Festbett gebunden werden und von der Pflanzenwurzel als Nährstoffe verwertet werden. Der Abbau von Stickoxiden erfolgt bei dem erfindungsgemäßen Filtersubstrat dadurch, daß die meisten Symbionten von Wurzeln Nitrate zu Amoniumionen reduzieren können. Selbst Fluoride, welche gasförmig für grüne Pflanzen als schwer toxisch gelten, können im Rahmen der erfindungsgemäßen Filtersubstrate ohne weiteres abgebunden werden, da die Filtersubstrate in der Regel alkalisch sind.

Während bei üblichen Kompostfiltern ein Endzustand von 8 % Huminsäuren bereits als gute Qualität gilt, lassen sich mit einer erfindungsgemäßen Bepflanzung Kompostendzustände mit 18 bis 20 % Huminsäuren ohne weiteres erzielen.

Um nun die Sorptionsfähigkeit des Filterbettes für Schadstoffe weiter zu verbessern, kann mit Vorteil so vorgegangen werden, daß dem Festbettfilter basisch wirksame Substanzen wie z.B. Schlacken aus Hüttenbetrieben oder Gips-Kalk-Gemisch aus trockener Rauchgasreinigung für die chemische Abbindung von gasförmigen Schadstoffen wie $SO_2$, $NO_x$, $NH_3$, HCl, HF, zugesetzt werden. Auf diese Weise können mineralische Abfälle mit basisch wirksamen Substanzen gleichfalls entsorgt werden, wobei insbesondere auch die Verwertung mineralischer Abfälle aus der Aufbereitung von Schichtsilikaten wie Kaolin, Talk od.dgl., einen bedeutenden Zusatznutzen ergibt.

Durch die Nutzung der Ablufttemperatur und der Abgasfeuchte kann die üblicherweise bei Rotteabluft erforderliche Unterkühlung unter den Taupunkt zur Herabsetzung der relativen Feuchtigkeit unterbleiben und es können die Abgase im mit Wasserdampf gesättigten Zustand eingesetzt werden, wobei ein zusätzliches Gießwasser für Nutzpflanzen oder Zierpflanzen am Biofilter nicht mehr erforderlich ist. Das Wasserhaltevermögen, wie es für das optimale Pflanzenwachstum wünschenswert ist, kann noch dadurch verbessert werden, daß dem Festbettfilter Ballaststoffe wie Torf, mit Lignin angereicherte Hydrolyserückstände, zerkleinerte Rinden, quellfähige Schichtsilikate und/oder aktivierte amorphe Kieselsäure zugesetzt werden, wobei derartige Zusätze nicht nur das Wasserhaltevermögen, sondern auch die Adsorptionsleistung die Durchgasbarkeit des Filtermaterials und/oder die Fixierung mikrobieller Exoenzyme und Metaboliten begünstigen.

Um die für die Lebensbedingungen der Biozönose notwendige Sauerstoffkonzentration aufrechtzuerhalten, werden mit Vorteil als zu reinigende Abgase Gemische aus Rotteabluft, Rauchgasen und Frischluft eingesetzt, wobei die Frischluftdosierung in Kombination mit der jeweiligen Rotteabluft den erforderlichen Sauerstoffgehalt sicherstellt.

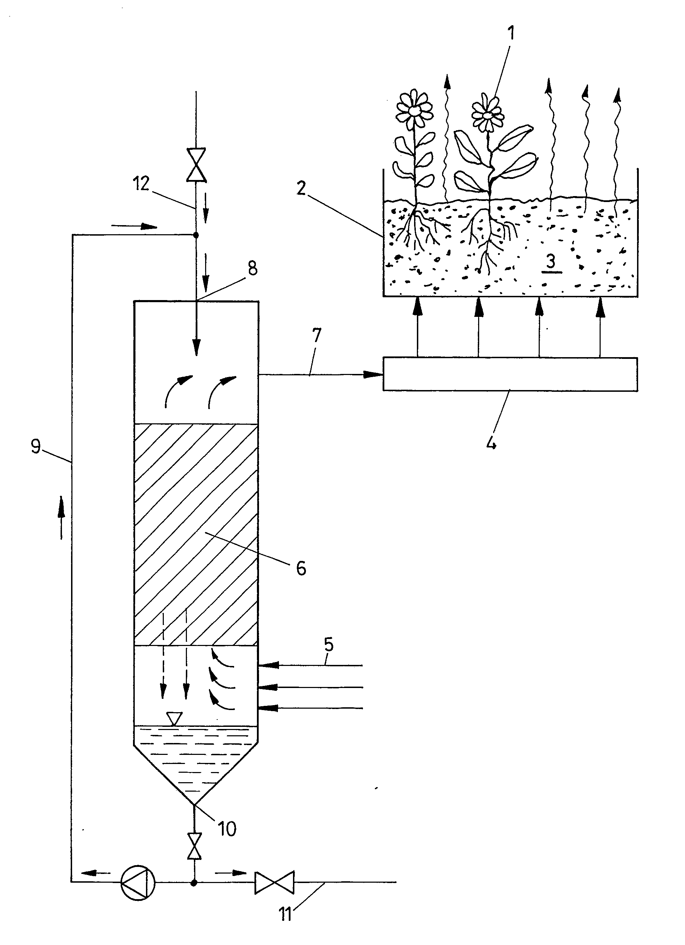

Die Erfindung wird nachfolgend an Hand eines in der Zeichnung dargestellten Ausführungsbeispieles näher erläutert.

Das mit Nutz- oder Zierpflanzen 1 bepflanzte Festbettfilter 2 ist mit lockerer Komposterde 3 befüllt. In den Festbettfilter wird von der Unterseite über einen Verteiler 4 Abluft bzw. Abgase mit korrigierter Feuchte und korrigierter Temperatur eingeleitet. Zur Einstellung der korrigierten Feuchte bzw. korrigierten Temperatur wird eine Mischung aus Rotteabluft, Rauchgas und Frischluft über Leitung 5 in einen Abgaswäscher 6 von unten eingebracht und nach Gegenstromwäsche mit Wasser über Leitung 7 dem Verteiler 4 und dem Festbettfilter 2 zugeleitet. Zur Vorreinigung bzw. zur Temperatur- und Feuchtigkeitseinstellung der Mischung aus Rotteabluft, Rauchgas und gegebenenfalls Frischluft wird am Kopf 8 des Wäschers 6 Wasser aus einem Wasserkreislauf 9 zugeführt. Nach der Gegenstromreinigung des Abluft- bzw. Abgasgemisches wird das Waschwasser bei 10 wiederum aus dem Wäscher 6 ausgetragen und neuerlich in den Wasserkreislauf 9 eingespeist. Gegebenenfalls vorhandenes Überschußwasser sowie zu stark verunreinigtes Waschwasser kann über Leitung 11 aus dem Wasserkreislauf 9 ausgetragen werden. Zur Einstellung einer erforderlichen Temperatur des Gasgemisches kann es erforderlich sein, in den Wasserkreislauf über Leitung 12 zusätzliches Frischwasser zuzudosieren oder zu stark verunreinigtes Waschwasser durch den Zusatz von Frischwasser zu ersetzen.

**Patentansprüche**

1. Verfahren zum Desodorieren und Reinigen von Abluft und Abgasen bei welchem die zu reinigenden Abgase durch ein Festbettfilter geleitet werden, wodurch das Festbettfilter mit Nutzpflanzen oder Zierpflanzen bepflanzt wird und aus einem für Nutzpflanzen oder Zierpflanzen geeigneten Substrat wie z.B. Kompost ausgebildet wird, dadurch gekennzeichnet, daß die Abluft bzw. die Abgase mit geregelter Temperatur und Feuchtigkeit durch das bepflanzte Festbettfilter geleitet werden, daß die Abluft bzw. Abgase, insbesondere Rauchgase in einem Wäscher vorgereinigt und gemischt werden, daß die Temperatur und Feuchtigkeit der zu reinigenden Abluft bzw. Abgase mit einem Wäscher eingestellt werden und daß die $CO_2$-Konzentration der durch das Festbettfilter geleiteten Gase auf unter 4 Vol.%, insbesondere 1 - 2 Vol.%, gegebenenfalls durch Zumischen von Frischluft zum Abgasstrom eingestellt wird.

2. Verfahren nach Anspruch 1, dadurch gekennzeichnet, daß die Zumischung und Kühlung von Rauchgasen mit der Maßgabe erfolgt, daß die Betriebstemperatur des Filterbettes unter 40°C, vorzugsweise zwischen 25 - 35°C gehalten wird.

3. Verfahren nach Anspruch 1 oder 2, dadurch gekennzeichnet, daß die Flächenbelastung des Filters auf weniger als 50 m³/m²h, vorzugsweise auf 20 - 30 m³/m²h, eingestellt wird.

4. Verfahren nach Anspruch 1, 2 oder 3, dadurch gekennzeichnet, daß dem Festbettfilter basisch wirksame Substanzen wie z.B. Schlacken aus Hüttenbetrieben oder Gips-Kalk-Gemisch aus trockener Rauchgasreinigung für die chemische Abbindung von gasförmigen Schadstoffen wie $SO_2$, $NO_x$, $NH_3$, HCl, HF, zugesetzt werden.

5. Verfahren nach einem der Ansprüche 1 bis 4, dadurch gekennzeichnet, daß dem Festbettfilter Ballaststoffe wie Torf, mit Lignin angereicherte Hydrolyserückstände, zerkleinerte Rinden, quellfähige Schichtsilikate und/oder aktivierte amorphe Kieselsäure zur Verbesserung der Adsorptionsleistung, des Wasserhaltevermögens, der Durchgasbarkeit des Filtermaterials und/oder zur Fixierung mikrobieller Exoenzyme und Metaboliten zugesetzt werden.

6. Verfahren nach einem der Ansprüche 1 bis 5, dadurch gekennzeichnet, daß als zu reinigende Abgase Gemische aus Rotteabluft, Rauchgasen und Frischluft eingesetzt werden.

Europäisches
Patentamt

**EUROPÄISCHER RECHERCHENBERICHT**

Nummer der Anmeldung

EP 89 89 0039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C- 869 039 (M. SCHOBER) <br> * Anspruch 1; Seite 2, Zeilen 51-58 * <br> --- | 1,2 | B 01 D 53/34 |
| A | UMWELT & TECHNIK <br> Band 9, Nr. 4, Dezember 1986, Seite 43, München, D; P.J. THOLANDER:"Beseitigung von Geruchsquellen."* gesamtes Dokument * <br> --- | 1 | |
| A | DE-A-2 809 357 (H. HOELTER) <br> * Ansprüche 1,2 * <br> --- | 1,4-6 | |
| A | DE-A-2 721 048 (HAZEMAG DR. E. ANDREAS GMBH) <br> * Ansprüche 1,7,11 * <br> ----- | 1,6 | |

**RECHERCHIERTE SACHGEBIETE (Int. Cl.4)**

B 01 D 53/00

Der vorliegende Recherchenbericht wurde für alle Patentansprüche erstellt

| Recherchenort | Abschlußdatum der Recherche | Prüfer |
|---|---|---|
| BERLIN | 26-04-1989 | BERTRAM H E H |